# EUROPEAN PATENT SPECIFICATION

(11) **EP 3 131 420 B1**
(45) Date of publication and mention of the grant of the patent: **21.08.2019**
(21) Application number: 15724380.9
(22) Date of filing: 17.04.2015
(51) Int. Cl.: A23L 33/17, A23L 33/00

(54) **HEALTH PROGRAMMING DURING PREGNANCY**
GESUNDHEITSPROGRAMMIERUNG WÄHREND DER SCHWANGERSCHAFT
PROGRAMME DE SANTÉ PENDANT LA GROSSESSE

(30) Priority: 18.04.2014 EP 14165282
(43) Date of publication of application: 22.02.2017
(73) Proprietor: N.V. Nutricia, 2712 HM Zoetermeer (NL)
(72) Inventor: DESCLÉE DE MAREDSOUS, Caroline, 91767 Palaiseau Cedex (FR); DAVILA, Anne-Marie, 75005 Paris (FR); OOZEER, Akhtar Raish, 3584 CTUtrecht (NL); OOSTING, Annemarie, 3584 CT Utrecht (NL); VAN DER BEEK, Eline Marleen, 3584 CT Utrecht (NL)
(74) Representative: Nederlandsch Octrooibureau
(86) International application number: PCT/NL2015/050260
(87) International publication number: WO 2015/160259

(56) References cited:
- ALISON K GOSBY ET AL: "Maternal Protein Restriction Increases Hepatic Glycogen Storage in Young Rats", PEDIATRIC RESEARCH, vol. 54, no. 3, 1 September 2003 (2003-09-01), pages 413-418, XP055143697, ISSN: 0031-3998, DOI: 10.1203/01.PDR.0000077470.63060.9B
- ZHENYU YANG ET AL: "Nutrition in pregnancy and early childhood and associations with obesity in developing countries", MATERNAL & CHILD NUTRITION, vol. 9, 20 November 2012 (2012-11-20), pages 105-119, XP055143733, ISSN: 1740-8695, DOI: 10.1111/mcn.12010

## Description

### Field of the invention

The present invention relates to the field of nutrition for pregnant women, in particular nutrition that provides health benefits for the progeny of the pregnant women after birth thereof.

### Background of the invention

Detrimental effects that are associated with unhealthy dietary habits such as consuming a Western-style diet are becoming increasingly problematic in society, in particular in the developed world. Large parts of the Western population have unhealthy eating habits and are unwilling or unable to change those habits, stimulated by their environment to continue ingesting unhealthy diet. The associated health risks and disorders which are the direct consequence of a Western-style diet are placing an ever increasing burden on health care.

Research is directed on disorders that are a direct consequence of unhealthy dietary habits, and how to prevent those. For example Newberry et al. (Hepatology, 2006, 44:1191-1205) discovered that a slight deviation in fatty acid uptake has a dramatic effect on Western-style diet induced obesity, and found that the liver fatty acid-binding protein (L-Fabp) may serve as sensor in regulating lipid homeostasis.

Detrimental effects that are associated with a Western-style diet include obesity, childhood obesity and visceral adiposity. Basically, Western-style diet has been found to be a direct cause of obesity.

In view of the serious health problems associated with Western-style diet, there exists a need in the art to be able to prevent or reduce the diet-induced problems at a stage as early as possible. Any reduced risk of detrimenetal effects at a very early stage in life will have a beneficial impact on the entire lifespan of the subject. Hence, it is the object of the present invention to provide a way to give newly born human subjects a better start in that they have a reduced risk of and are thus protected against the detrimental effects of Western-style diet.

Gosby et al. in Pediatric Research 2003, vol. 54(3), pages 413-418 describe a study aimed to determine whether maternal protein restriction alters hepatic glycogen metabolism. Diets containing a very low percentage of calories from protein are investigated.

Yang and Huffman in Maternal & Child Nutrition, 2012, vol 9 pages 105-119 nutrition in pregnancy and early childhood and associations with obesity in developing countries and suggest that adequate and balanced protein and energy intakes during pregnancy could be a protective factor for adult obesity.

Zambrano et al. in Journal of Physiology 571.1, 2006, pages 221-230 studied the offspring of rats being fed a low protein diet during pregnancy. Their conclusion is that maternal protein restriction likely leads to increased tissue fat, elevated cholesterol and insulin resistance in offspring.

### Summary of the invention

The inventors have surprisingly found that balancing the average daily protein intake during pregnancy, has a marked effect on the offspring after birth. In particular a marked beneficial effect on the offspring was found regarding reducing and/or preventing detrimental effects or symptoms which are associated with consumption of a Western-style diet. As such, the offspring born from a female who ingested a diet with a balanced average daily protein are provided with protection against detrimental effects or symptoms of a Western-style diet.

### Detailed description of the invention

The invention pertains to the subject-matter of the claims.

Disclosed herein is a method of reducing and/or preventing detrimental effects or symptoms associated with a Western-style diet in a human subject, comprising administering to a woman during pregnancy with the human subject food (i) having an average daily protein content of 6 to 12 %, based on total calories of the total daily food intake of the pregnant woman, and/or (ii) providing an average daily dose of 33 to 66 gram protein.

Also disclosed herein is a method of providing protection against the health challenge of a Western-style diet in a human subject, comprising administering to a woman during pregnancy with the human subject food (i) having an average daily protein content of 6 to 12 %, based on total calories of the total daily food intake of the pregnant woman, and/or (ii) providing an average daily dose of 33 to 66 gram protein.

The present invention relates to a diet having an average daily protein content of 6 to 12 %, based on total calories of the total daily food intake of a woman during pregnancy with a human subject, for use in reducing and/or preventing detrimental effects or symptoms associated with a Western-style diet in the human subject or for providing protection against the health challenge of a Western-style diet in the human subject, wherein the diet is administered to the pregnant woman, and wherein the detrimental effects or symptoms or the health challenge include at least one selected from the group consisting of visceral adiposity, increased total body weight, increased visceral adipose tissue weight, increased peri-ovarian adipose tissue weight.

### Food

The present invention relates to dietary rules which are conveniently implemented in the regular eating pattern or regular diet of a pregnant woman, in particular to balancing the average daily protein intake to 6 to 12 %, based on total calories of the total daily food intake of the pregnant woman. In the context of the present invention, the term "food" may be replaced by "diet" or "nutritional composition". The administration according to the invention may also be referred to as "ingestion" of food.

The average daily protein intake is 6 to 12 %, preferably 8 to 10 %, based on total calories of the total daily food intake of the pregnant woman. In a preferred embodiment, the food that is ingested by or administered to the pregnant woman has an average daily protein content of 6 to 12 %, based on total calories of the total daily food intake of the pregnant woman and provides an average daily dose of 33 to 66 gram protein. Preferably the food has an average daily protein content of 6 to 12 %, based on total calories of the total daily food intake of the pregnant woman and provides an average daily dose of 44 to 55 gram protein. More preferably the food has an average daily protein content of 8 to 10 %, based on total calories of the total daily food intake of the pregnant woman and provides an average daily dose of 33 to 66 gram protein. Most preferably the food that is ingested by or administered to the pregnant woman has an average daily protein content of 8 to 10 %, based on total calories of the total daily food intake of the pregnant woman and provides an average daily dose of 44 to 55 gram protein.

Such an average daily protein intake implies that it is not necessary that the protein intake of the pregnant women is within the given boundaries every day of the administration regime, but some deviation above the upper limit or below the lower limit is allowed for, as long as the average daily protein intake, thus assessed over a multitude of days, is within the given boundaries. Preferably, the average protein intake is assessed on weekly basis, i.e. during a period of seven days, the average daily protein intake is within the given boundaries. Preferably, the daily protein intake of the pregnant woman does not deviate from the given boundaries for more than 4 days per week, more preferably not more than 2 days per week, even more preferably not more than 1 day per week, most preferably not a single day during the entire duration of the administration regime.

In addition, it is preferred that on any given day, the protein intake does not deviate more than 25 %, i.e. the protein intake of each day is preferably between 25 % below the lower limit and 25 % above the upper limit. More preferably, the allowable deviation from the average daily protein intake is not more than 10 % for the given boundaries, even more preferably not more than 5 %, most preferably no deviation from the given boundaries is allowed for. In a preferred embodiment, the daily protein intake of the pregnant does not deviate more than 4 days per week and not more than 25 %, more preferably not more than 2 days per week and not more than 10 %, even more preferably not more than 1 day per week and not more than 5 %. It is especially preferred that the daily protein intake of the pregnant women does not deviate from the given boundaries during the entire duration of the administration regime.

Here above, the "given boundaries" refer to the average protein intake of 6 to 12 % based on total calories of the total daily food intake, or the more preferred ranges, as well as for the protein content defined differently (e.g. as a daily dose (grams per day)). It should be noted that the above discussed allowable deviation from the given boundaries also applies to the preferred ranges of lipids and carbohydrates discussed below, for each type of definition (e.g. as % of total calories, daily dose). Since the allowable deviation is given in percentages from the upper and lower limit, these margins may readily be used for any range defined herein.

The type of protein or source of protein is not critical for the present invention. In the present context the amount of protein is the sum of intact protein, protein hydrolysates and free amino acids.

Since the average daily protein intake is conveniently incorporated into the regular eating pattern of the pregnant woman, it is preferred that the food constitutes a diet which is generally considered healthy and which is preferably adapted for pregnant women. Further components of the food, next to the protein discussed above, preferably include lipid and carbohydrate. In addition, it is preferred that further beneficial ingredients such as minerals, vitamins, dietary fibres etc., are present in the food.

It is preferred that the food comprises lipid, preferably the average daily lipid intake is 15 to 40 % based on total calories of the total daily food intake of the pregnant woman, more preferably the average daily lipid intake is 20 to 35 % based on total calories of the total daily food intake of the pregnant woman.

In one embodiment, the lipid in the food used according to the present invention comprises omega-3 fatty acids. In another embodiment, the lipid in the food used according to the present invention comprises omega-6 fatty acids. Nutritionally important omega-3 fatty acids include alpha-linolenic acid (ALA, 18:3n3), eicosapentaenoic acid (EPA, 20:5n3) and docosahexaenoic acid (DHA, 22:6n3). Thus in one embodiment, the food used according to the present invention comprises one or more selected from the group consisting of ALA, EPA and DHA, preferably comprises at least ALA. Preferably the food used according to the present invention comprises 0.1 to 1.0 % ALA based on total calories of the total daily food intake Nutritionally important omega-6 fatty acids include linoleic acid (LA, 18:2n6). Thus in one embodiment, the food used according to the present invention comprises LA. Preferably the food used according to the present invention comprises 3 to 6 % LA based on total calories of the total daily food intake. In one embodiment, the food used according to the present invention comprises LA and ALA, preferably 3 to 6 % LA and 0.1 to 1.0 % ALA based on total calories. In one embodiment, the lipid in the food used according to the present invention comprises DPA (docosapentanenoic acid, 22:5n3) or arachidonic acid (AA, 20:4n6, an omega-6 fatty acid) or both. In one embodiment, the lipid in the food used according to the present invention comprises PUFAs and/or LC-PUFAs as free fatty free fatty acids, in triglyceride form, in diglyceride form, in monoglyceride form, in phospholipid form, or as a mixture of one of more of the above.

In one embodiment, the lipid in the food used according to the present invention comprises at least one, suitably at least two lipid sources selected from the group consisting of linseed oil (flaxseed oil), rape seed oil (including colza oil, low erucic acid rape seed oil and canola oil), salvia oil, perilla oil, purslane oil, lingonberry oil, sea buckthorn oil, hemp oil, high oleic sunflower oil, high oleic safflower oil, olive oil, marine oils, microbial oils, black currant seed oil, echium oil, butter fat, butter oil, coconut oil and palm kernel oil.

It is preferred that the food comprises carbohydrate, preferably the average daily carbohydrate intake is 40 to 75 % based on total calories of the total daily food intake of the pregnant woman, more preferably the average daily carbohydrate intake is 45 to 65 % based on total calories of the total daily food intake of the pregnant woman.

Preferably a pregnant woman ingests an average of 2200 kcal per day. Hence in one embodiment the food that is ingested by or administered to a pregnant women comprises 6 to 12 %, preferably 8 to 10 %, calories protein based on an average daily total of 2200 kcal and 15 to 40 %, preferably 20 to 35 %, calories lipid based on an average daily total of 2200 kcal and 40 to 75 %, preferably 45 to 65 %, calories carbohydrate based on an average daily total of 2200 kcal.

The food may further comprise non-digestible oligosaccharides. The term "non-digestible" as used in the present invention refers to saccharides which are not digested in the intestine by the action of acids or digestive enzymes present in the human upper digestive tract (small intestine and stomach), but which are fermented by the human intestinal flora. Mono- and disaccharides such as glucose, galactose, fructose, sucrose and lactose are digestible.

Preferably the food comprises non-digestible oligosaccharides with a degree of polymerization (DP) of 2 to 250, more preferably 3 to 60. Preferably the non-digestible oligosaccharides comprises at least one oligosaccharide selected from the group of fructo-oligosaccharides (such as inulin), galacto-oligosaccharides (such as transgalacto-oligosaccharides or beta-galacto-oligisaccharides), gluco-oligosaccharides (such as gentio-, nigero- and cyclodextrin-oligosaccharides), arabino-oligosaccharides, mannan-oligosaccharides, xylo-oligosaccharides, fuco-oligosaccharides, arabinogalacto-oligosaccharides, glucomanno-oligosaccharides, galactomanno-oligosaccharides, sialic acid oligosaccharides and uronic acid oligosaccharides, more preferably selected from the group of fructo-oligosaccharides, galacto-oligosaccharides and uronic acid oligosaccharides, most preferably selected from the group of fructo-oligosaccharides and galacto-oligosaccharides. Preferably, the food comprises galacto-oligosaccharides, more preferably transgalacto-oligosaccharides. In a preferred embodiment the food comprises a mixture of galacto-oligosaccharides and fructo-oligosaccharides.

The galacto-oligosaccharides preferably have a DP of 2 to 10. Preferably the galacto-oligosaccharides have an average DP of below 6. The galacto-oligosaccharide is preferably selected from the group consisting of transgalacto-oligosaccharides, lacto-N-tetraose (LNT), lacto-N-neotetraose (neo-LNT), fucosyl-lactose, fucosylated LNT and fucosylated neo-LNT. Transgalacto-oligosaccharides (TOS) are for example sold under the trademark Vivinal™ (Borculo Domo Ingredients, Netherlands). Preferably the saccharides of the transgalacto-oligosaccharides are β-linked. The fructo-oligosaccharide preferably have a DP of 2 to 250, more preferably 2 to 100, most preferably 5 to 60. Preferably the fructo-oligosaccharides have an average DP of above 10. Fructo-oligosaccharides include inulin, levan and/or a mixed type of polyfructan. An especially preferred fructo-oligosaccharide is inulin. Fructo-oligosaccharide suitable to include in the food for use according to the present invention is commercially available, e.g. as Raftiline®HP (Orafti). Preferably, the food comprises galacto-oligosaccharides and fructo-oligosaccharides in a weight ratio galacto-oligosaccharides : fructo-oligosaccharides of 99 : 1 to 1 : 99, more preferably 20 : 1 to 1 : 1, most preferably 12 : 1 to 7 : 1.

The food may further comprise a mixture of short chain and long chain fructo-oligosaccharides. Preferably a mixture of fructo-oligosaccharides with an average DP below 10 and fructo-oligosaccharides with an average DP above 10. Fructo-oligosaccharide with an average DP below 10 suitable for use in the compositions is commercially available, e.g. as Raftilose®. Fructo-oligosaccharide with an average DP above 10 suitable for use in the compositions is commercially available, e.g. as Raftiline®HP. Preferably, the present composition comprises fructo-oligosaccharides with an average DP below 10 and fructo-oligosaccharides with an average DP above 10 in a weight ratio of 20 : 1 to 1 : 20, more preferably 10 : 1 to 1 : 10, most preferably 5 : 1 to 1 : 5 or in a ratio of about 1 : 1.

Preferably, the average daily intake of non-digestible oligosaccharides is 0.1 to 50 g, more preferably 1 to 35 g, even more preferably 5 to 25 g per day, most preferably 10 to 20 g per day.

The food may further comprise micronutrients, more preferably vitamins and minerals. Preferred micronutrients are those that are beneficial for pregnant women. Those ingredients are generally known in the art and usually comprised in supplements intended for pregnant women.

Preferred vitamins to include in the food are the water-soluble vitamins; vitamin B1 (thiamine), vitamin B2 (riboflavin), vitamin B3 (niacin), vitamin B5 (pantothenic acid), vitamin B6 (pyridoxine), folic acid, vitamin B12 (cyanocobalamine), biotin, choline, and vitamin C, and the fat-soluble vitamins; vitamin D3, vitamin E and vitamin K. Most preferred vitamins are folic acid, vitamin B1, vitamin B2, vitamin B6, vitamin B12, choline and vitamin C.

Preferred minerals to include in the food are calcium, phosphorus, zinc, iodine, iron, manganese, selenium, copper, and magnesium. Most preferred minerals are calcium, iodine, zinc and iron.

### Administration regime

Herein, the "administration regime" refers to the period during which the pregnant women is administered with the food as described above. Thus, the administration regime may also be referred to as "period of administration" or just that "administration is for" a particular period. Preferably, the food is administered during at least 4 consecutive weeks, more preferably during at least 6 consecutive weeks, most preferably during at least 10 consecutive weeks during the pregnancy. It is preferred that the above defined consecutive weeks of administration are in the period between week 12 of the pregnancy and birth of the human subject, more preferably between week 20 and birth of the human subject, most preferably between week 24 and birth of the human subject. It is thus preferred that administration is continued for at least 4 consecutive weeks in the period between week 12 of the pregnancy and birth of the human subject, or for at least 6 consecutive weeks in the period between week 12 of the pregnancy and birth of the human subject, or for at least 6 consecutive weeks in the period between week 20 of the pregnancy and birth of the human subject, or for at least 10 consecutive weeks in the period between week 20 of the pregnancy and birth of the human subject, or for at least 10 consecutive weeks in the period between week 24 of the pregnancy and birth of the human subject. It is preferred that administration is continued until birth of the human subject.

### Pregnant woman

The child of any pregnant woman benefits from the present food. Hence, the target group for the herein defined administration regime is pregnant women in general.

However, certain groups of pregnant women, in particular their progeny, may benefit to a greater extent from the present food. Thus, in one embodiment according to the present invention the pregnant woman resides in an environment where there is a predisposition for ingesting a Western-style diet. In other words, it is preferred that the pregnant woman has a predisposition to give birth to a child with an increased risk of developing the habit of consuming Western-style diets. Such a predisposition may be a genetic predisposition and/or an environmental predisposition and may include an above-average consumption of Western-style diets by the pregnant women herself, and/or by close relatives or housemates of the pregnant women, as it is more likely that a child raised in such an environment has an increased risk a developing unhealthy eating habits such as the habit of consuming Western-style diets. A particular predisposition resides in the presence of Western-style diet induced obese human subjects in close proximity to the pregnant women, e.g. close relatives or housemates of the pregnant women, or in particular when the pregnant women herself suffers from Western-style diet induced obesity.

### Western-style diet

It should be noted that the term "Western-style diet" is distinct from the term "food" in the context of the present invention. A Western-style diet is known in the art to be a general unhealthy diet, characterized by a large content of (unhealthy) lipids and a large content of rapidly digestible carbohydrates, in particular sucrose. A Western-style diet refers to the general eating pattern of a human subject, and may thus suitably be defined by average daily intake or average daily dose of specific components such as lipids. A Western-style diet may also be referred to as a "high-fat diet", as a "cafeteria diet" or as "unhealthy diet". Typically, a Western-style diet is high in fat and high in saturated fat. Further characteristics of a Western-style diet include being high in digestible carbohydrates, in particular high in sucrose.

Herein, "high" refers to a content of at least 10 % higher as general dietary recommendations prescribe.

In the context of the present invention, the Western-style diet is defined as containing more than 45 % lipid, based on total calories of the daily food intake, wherein the lipid contains at least 50 % by weight of saturated fats, such as present in for example cream, cheese, butter, ghee, suet, tallow, lard, and fatty meats.

Further, the Western-style diet is defined as containing more than 50 % carbohydrate, based on total calories of the daily food intake, wherein the carbohydrate contains at least 75 % by weight of rapidly digestible carbohydrates selected from the group consisting of glucose, fructose, sucrose, lactose and starch.

Further a Western-style is defined by a high caloric intake wherein the recommended daily intake of calories is exceeded by at least 10%. Dietary recommendations in this respect vary with age and gender and are known to the skilled person. Exemplary of a high daily intake of calories are at least 2200 kcal for an adult woman and at least 2750 kcal for an adult man. Lower limits apply for humans 18 years of age or younger. Finally a Western-style diet is characterised in that it is ingested at least 4 times per week for at least 4 weeks in a row.

Typical components of a Western-style diet include food products containing a high amount of saturated fatty acids (including meat fats, milk fat, butter, lard, coconut oil, palm oil and/or palm kernel oil).

### Application

The administration of the food to a woman pregnant with a human subject is found to have a beneficial effect on the human subject, in particular after birth. In general, it has been found that such administration reduces and/or prevents detrimental effects associated with a Western-style diet. Also, it has been found that such administration provides protection against detrimental effects associated with a Western-style diet. In the context of the present invention, the verb "to prevent" could also be worded as "to reduce the risk or occurrence of'.

Providing protection against a Western-style diet involves the reduction in the occurrence of detrimental effects associated with a Western-style diet. This embodiment may also be worded as a reduced susceptibility to a Western-style diet, in particular to the detrimental effects associated therewith.

The detrimental effects associated with a Western-style diet may also be referred to as symptoms of a Western-style or disorders associated with a Western-style diet. These detrimental effects refer to the negative effects on the health of a human subject which occur as a consequence of unhealthy eating habits or unhealthy eating pattern, in particular by a Western-style diet.

Herein, a "decrease" or "reduction" refers to a decrease observed in a subject, ingesting a Western-style diet and born from a mother who ingested the food according to the invention during pregnancy as defined herein, compared to a subject, ingesting a Western-style diet and born from a mother who did not ingest the food according to the invention during pregnancy as defined herein. Likewise, an "increase" refers to an increase observed in a subject, ingesting a Western-style diet and born from a mother who ingested the food according to the invention during pregnancy as defined herein, compared to a subject, ingesting a Western-style diet and born from a mother who did not ingest the food according to the invention during pregnancy as defined herein.

These preventive effects of health protection upon challenge by a Western-style diet occur in the human subject, when the woman pregnant with the human subject was administered with the food as defined according to the invention. Surprisingly, it was found that these effects prolong throughout the subject's life. Thus, the present administration of food may be considered a programming of the subject's health throughout his or her life. In a particular embodiment, the effects occur in a human subject of 0 to 25 years of age, preferably from 0 to 12 years of age, more preferably from 0 to 5 years of age. Alternatively, the effects preferably occur in a human subject of 5 to 25 years of age, preferably from 10 to 25 years of age, more preferably from 15 to 25 years of age.

### Example

### MATERIALS AND METHODS

Diets: Three experimental diets were used. Two diets were isoenergetic (3.5 kcal/g); diet 1 according to the invention with balanced protein content (20% of total calories from protein) and the control diet 2 with increased protein content (55% of total calories from protein). Diet 3 is a high-fat and high-sucrose diet, having a higher energy density (4.5 kcal/g). All protein used was from cow's milk. The composition of the three diets is given in table 1.

Diet 1 is representative for the food according to the invention, albeit adapted for rats, having a reduced protein content of 6 to 12 en% and/or a daily dose of 33 - 66 g protein (experimental diet or EXP). Diet 2 is representative for a comparative diet with an increased protein content. Diet 3 is representative for a Western-style diet (WSD) adapted for rats, having a high fat (lard) and sucrose content as well as a high caloric density.

**Table 1: Diet composition**

| | diet 1 - invention | diet 2 - comp. | diet 3 - WSD |
|---|---|---|---|
| energy density (kcal/g) | 3.5 | 3.5 | 4.5 |
| total protein (en%) | 20 | 55 | 20 |
| total carbohydrates (en%) | 70 | 35 | 38 |
| total fat (en%) | 10 | 10 | 42 |
| cow's milk protein (g/kg) | 200 | 530 | 250 |
| cornstarch (g/kg) | 570 | 287 | 214 |
| sucrose (g/kg) | 92.7 | 45.7 | 214 |
| soy bean oil (g/kg) | 40 | 40 | 10 |
| lard (g/kg) | 0 | 0 | 215 |
| mineral mix (g/kg) | 35 | 35 | 35 |
| vitamins (g/kg) | 10 | 10 | 10 |
| cellulose (g/kg) | 50 | 50 | 50 |
| choline (g/kg) | 2.3 | 2.3 | 2.3 |

Experimental design: Twelve female Wistar rats (Harlan) were maintained under controlled conditions (22 °C, 12:12h dark-light cycle) with free access to regular chow and tap water. After one week of habituation, they were mated with males and half of them had diet 1 and the other half received diet 2. Pregnant dams were housed individually. At birth, litters were standardized to 8 pups. Mothers all received diet 1 after birth. At weaning, 16 female pups of each group were chosen and housed individually. They were selected to have a maximum of families minimizing the effect of any single dam. Half of the pups received diet 3 and the other half received diet 1, making 4 groups of 8 female pups. These groups are referred to as follows:
1. EXP-WSD group: gestation diet 1 - lactation diet 1 - weaned diet 3;
2. EXP-control group: gestation diet 1 - lactation diet 1 - weaned diet 1;
3. control-WSD group: gestation diet 2 - lactation diet 1 - weaned diet 3;
4. control-control group: gestation diet 2 - lactation diet 1 - weaned diet 1.

The mothers were sacrificed after the weaning (day 22 after birth) and the female pups at the age of 10 weeks.

Body weight, body composition and food intake: Each animal was weighed daily. Food was given 3 times a week and diet consumption was measured each time. Body composition was determined by dissection at sacrifice. Organs and adipose tissue were weighed.

Plasma metabolites: Blood samples were obtained after a 12h fast, 2 days before the sacrifice. Blood was collected on EDTA and centrifuged at 3000 x g for 10 min at 4°C. Plasmas were stored at -20°C. They were used to assay triglycerides using an Olympus AU 400 automatic chemical analyzer.

Hepatic triglycerides: The triglycerides in the liver were measured by a method described by Arakawa et al. Endocr J 2011;58(3):161-70. The samples were mixed in a buffer (150 mM NaCl, 10 mM tris, 0.1% triton) with an ultraturrax, and assayed by colorimetric enzymatic assays (Randox).

Adipose cells diameter: Cellularity analysis was determined in peri-ovarian adipose tissue as described by Briquet-Laugier et al. Am J Physiol 1994, 267:E439-46). Briefly, after collagenase treatment of an aliquot of adipose tissue, images of isolated adipocytes were acquired from a microscope fitted with a camera and the measurement of -1000 cell diameters was performed using AxioVision Rel. 4.5 (Zeiss, Le Pecq, France).

### RESULTS

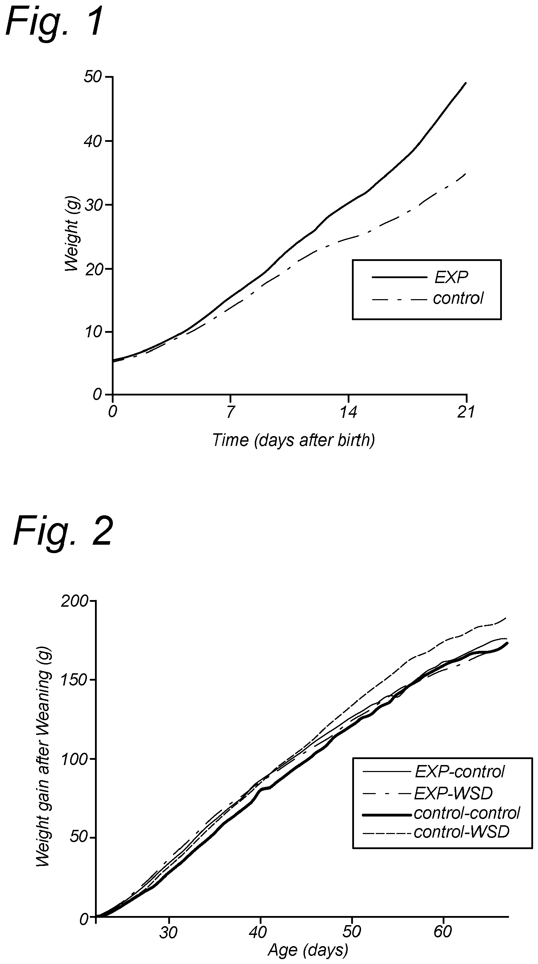

Weight and food intake: At birth, gestation diet had no significant effect on birth weight, litter size and litter weight. During lactation (day 0 to 22), pups of mothers who received control diet 2 during gestation gained less weight than the control pups (p<0.05 from day 10 to the end of lactation, figure 1). Appropriate weight gain is of the utmost importance for newborns to ensure optimal growth.

Pups receiving Western-style diet 3 after weaning gained more weight only when their mothers received control diet 2 during gestation (control-control vs. control-WSD: p<0.05 from day 52, but no significant difference between EXP-control and EXP-WSD, figure 2). However, when pups received the control diet, there was no significant difference in weight gain between groups. These control-WSD pups, who gained more weight, also ingested more energy than the others (data not shown). The interaction between gestation diet of the mother and diet after weaning of the pup is significant (p = 0.046). Notably, the energy intake of control-WSD group is significantly higher than the control-control group, but the EXP-WSD group did not ingest significantly more energy.

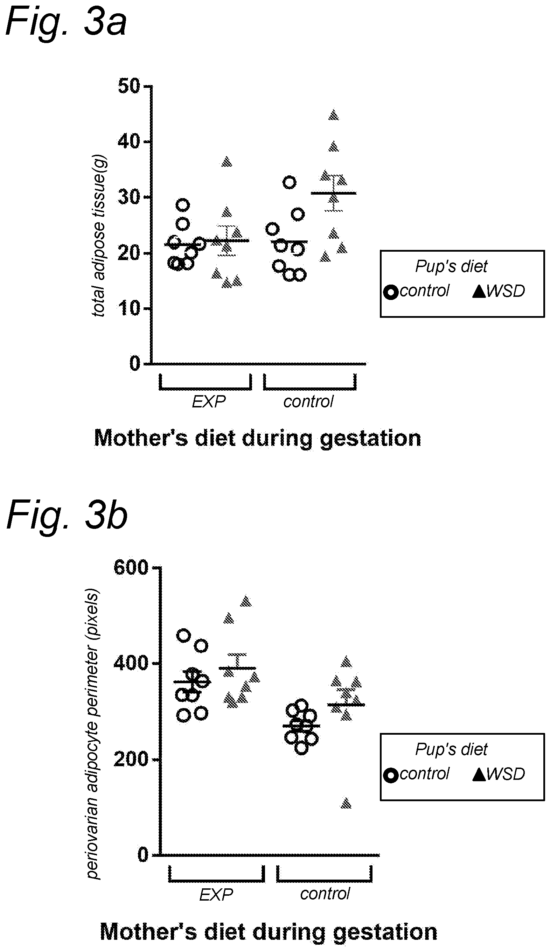

Adipose tissue: Western-style diet, which is known to be an obesogenic diet, had an effect on visceral adipose tissue weight only on pups born of dams that ingested the control diet during gestation. The interaction between gestation diet and diet after weaning was significant (p = 0.043), meaning that the effect of WSD on pups depends on gestation diet of the mother. Thus, control-WSD pups had more visceral adipose tissue than control-control pups (p = 0.038), whereas there is no significant difference between EXP-control and EXP-WSD pups (figure 3A). Similarly, the EXP-WSD pups developed significantly less peri-ovarian adipose tissue (no significant difference compared to the EXP-control pups) compared to the control-WSD group (significant increase compared to control-control pups, p = 0.04, data not shown).

Pups of control mothers developed smaller adipocytes (p = 0.069, figure 3B). Associated with a higher adipose tissue weight, this means that the control-WSD group had more adipocytes compared to the EXP-WSD group. They seem to have developed adipose tissue hyperplasia upon consumption of the Western-style diet. Fasted blood triglyceride levels and hepatic triglyceride content were increased for all WSD-pups compared to control-pups, irrespective of gestation diet (data not shown).

## Claims

1. Diet having an average daily protein content of 6 to 12 %, based on total calories of the total daily food intake of a woman during pregnancy with a human subject, for use in reducing and/or preventing detrimental effects or symptoms associated with a Western-style diet in the human subject or for providing protection against the health challenge of a Western-style diet in the human subject, wherein the diet is administered to the pregnant woman, and wherein the detrimental effects or symptoms or the health challenge include at least one selected from the group consisting of visceral adiposity, increased total body weight, increased visceral adipose tissue weight, increased peri-ovarian adipose tissue weight.

2. The diet for use according to claim 1, wherein the diet has an average daily protein content of 8 to 10 %, based on total calories of the total daily food intake of the woman.

3. The diet for use according to claim 1 or 2, wherein the diet has an average daily dose of 44 to 55 gram protein.

4. The diet for use according to any one of claims 1 to 3, wherein the diet has an average lipid content of 15 to 40 % and an average carbohydrate content of 40 to 75 %, based on total calories of the total daily food intake of the woman.

5. The diet for use according to any one of claims 1 to 4, wherein the administration is daily for at least 4 consecutive weeks during the period between week 12 of the pregnancy and birth of the human subject.

6. The diet for use according to claim 5, wherein the administration is daily for at least 10 consecutive weeks during the period between week 20 of the pregnancy and birth of the human subject.

7. The diet for use according to any one of claims 1 to 6, wherein the pregnant woman resides in an environment where there is a predisposition for ingesting a Western-style diet.

## Patentansprüche

1. Diät mit einem durchschnittlichen täglichen Proteingehalt von 6 bis 12%, bezogen auf die Gesamtkalorien der gesamten täglichen Nahrungsaufnahme einer Frau während einer Schwangerschaft mit einem Menschen, zur Verwendung bei der Verminderung und/oder Verhinderung von nachteiligen Wirkungen oder Symptomen, die mit einer Diät nach westlichen Vorbild bei dem Menschen verbunden sind, oder zum Bereitstellen von Schutz vor gesundheitlicher Herausforderung durch eine Diät nach westlichen Vorbild bei dem Menschen, wobei die Diät der schwangeren Frau verabreicht wird und wobei die nachteiligen Wirkungen oder Symptome oder die gesundheitliche Herausforderung mindestens eine ausgewählt aus der Gruppe bestehend aus viszeraler Adipositas, erhöhtem Gesamtkörpergewicht, erhöhtem Gewicht des viszeralen Fettgewebes, erhöhtem Gewicht des periovarischen Fettgewebes beinhalten.

2. Diät zur Verwendung nach Anspruch 1, wobei die Diät einen durchschnittlichen täglichen Proteingehalt von 8 bis 10%, bezogen auf die Gesamtkalorien der gesamten täglichen Nahrungsaufnahme der Frau, aufweist.

3. Diät zur Verwendung nach Anspruch 1 oder 2, wobei die Diät eine durchschnittliche tägliche Dosis von 44 bis 55 Gramm Protein aufweist.

4. Diät zur Verwendung nach irgendeinem der Ansprüche 1 bis 3, wobei die Diät einen durchschnittlichen Lipidgehalt von 15 bis 40% und einen durchschnittlichen Kohlenhydratgehalt von 40 bis 75% aufweist, bezogen auf die Gesamtkalorien der gesamten täglichen Nahrungsaufnahme der Frau.

5. Diät zur Verwendung nach irgendeinem der Ansprüche 1 bis 4, wobei die Verabreichung täglich für mindestens 4 aufeinanderfolgende Wochen während des Zeitraums zwischen der 12. Schwangerschaftswoche und der Geburt des Menschen erfolgt.

6. Diät zur Verwendung nach Anspruch 5, wobei die Verabreichung täglich für mindestens 10 aufeinanderfolgende Wochen während des Zeitraums zwischen der 20. Schwangerschaftswoche und der Geburt des Menschen erfolgt.

7. Diät zur Verwendung nach irgendeinem der Ansprüche 1 bis 6, wobei die schwangere Frau sich in einer Umgebung befindet, in der eine Prädisposition für die Einnahme einer Diät nach westlichen Vorbild vorhanden ist.

## Revendications

1. Régime présentant une teneur journalière moyenne en protéines comprise entre 6 et 12 % du total des calories de l'absorption journalière totale de nourriture d'une femme pendant la grossesse d'un sujet humain, destiné à être utilisé pour réduire et/ou prévenir les effets ou les symptômes nuisibles associés à un régime de type occidental chez le sujet humain ou à apporter une protection contre le problème sanitaire lié à régime de type occidental chez le sujet humain, dans lequel le régime est administré à la femme enceinte et dans lequel les effets ou les symptômes nuisibles ou le problème sanitaire comprennent au moins un élément choisi dans le groupe constitué de l'adiposité viscérale, l'augmentation du poids corporel total, l'augmentation du poids des tissus adipeux viscéraux, l'augmentation du poids des tissus adipeux péri-ovariens.

2. Régime destiné à être utilisé selon la revendication 1, dans lequel le régime présente une teneur journalière moyenne en protéines compris entre 8 et 10 % du total des calories de l'absorption journalière totale de nourriture de la femme.

3. Régime destiné à être utilisé selon la revendication 1 ou 2, dans lequel le régime comprend une dose journalière comprise entre 44 et 55 grammes de protéines.

4. Régime destiné à être utilisé selon l'une quelconque des revendications 1 à 3, dans lequel le régime présente une teneur moyenne en lipides comprise entre 15 et 40 % et une teneur moyenne en glucides comprise entre 40 et 75 % du total des calories de l'absorption journalière totale de nourriture de la femme.

5. Régime destiné à être utilisé selon l'une quelconque des revendications 1 à 4, dans lequel l'administration est quotidienne pendant au moins 4 semaines consécutives au cours de la période comprise entre la semaine 12 de la grossesse et la naissance du sujet humain.

6. Régime destiné à être utilisé selon la revendication 5, dans lequel l'administration est quotidienne pendant au moins 10 semaines consécutives au cours de la période comprise entre la semaine 20 de la grossesse et la naissance du sujet humain.

7. Régime selon l'une quelconque des revendications 1 à 6, dans lequel la femme enceinte réside dans un environnement où il y a une prédisposition à l'ingestion d'un régime de type occidental.
